# EUROPEAN PATENT SPECIFICATION

(11) **EP 1 155 264 B1**
(45) Date of publication and mention of the grant of the patent: **29.10.2008**
(21) Application number: 00908781.8
(22) Date of filing: 24.02.2000
(51) Int. Cl.: F25B 17/08, F25B 39/02, C09K 5/04

(54) **DISPERSION OF REFRIGERANT MATERIALS**
VERTEILUNG VON MATERIALIEN ZUR KÄLTEERZEUGUNG
DISPERSION DE MATIERES FRIGORIGENES

(30) Priority: 26.02.1999 US 121744 P
(43) Date of publication of application: 21.11.2001
(73) Proprietor: Tempra Technology, Inc., Bradenton, FL 34203-7754 (US)
(72) Inventor: SABIN, Martin, W., Sarasota, FL 34243 (US)
(74) Representative: Wibbelmann, Jobst
(86) International application number: PCT/US2000/004639
(87) International publication number: WO 2000/050824

(56) References cited:
- US-A- 4 638 646
- US-A- 5 018 368
- US-A- 5 048 301
- US-A- 5 168 708
- US-A- 5 186 020
- US-A- 5 731 260

## Description

### Background of the Invention

The invention relates to self-refrigerating devices employing evaporation/condensation processes. Specifically the invention relates to methods for the preparation of refrigerant materials useful in such devices, and the refrigerant materials resulting from these preparation methods.

Self-refrigerating devices are known in the art. Many products, including liquid products, have more favorable properties when cold than when at ambient temperatures. Thus, cooling of these products to temperatures of between about 0°C and 20°C is desirable. Generally, such cooling is carried out by electrically-powered refrigeration units, or by means of a phase change material such as ice. The use of these units to cool such foods and beverages is not always practical because refrigerators generally require a source of electricity, they are not usually portable, and they do not cool the food or beverage quickly.

An alternate method for providing a cooled material on demand is to use portable insulated containers. However, these containers function merely to maintain the previous temperature of the food or beverage placed inside them, or they require the use of ice cubes to provide the desired cooling effect. When used in conjunction with ice, insulated containers are much more bulky and heavy than the food or beverage. Moreover, in many locations, ice may not be readily available when the cooling action is required.

Ice cubes have also been used independently to cool food or beverages rapidly. However, use of ice independently for cooling is often undesirable because ice may be stored only for limited periods above 0°C. Moreover, ice may not be available when the cooling action is desired.

In addition to food and beverage cooling, there are a number of other applications for which a portable cooling device is extremely desirable. These include medical applications, including cooling of tissues or organs; preparation of cold compresses and cryogenic destruction of tissues as part of surgical procedures; industrial applications, including production of cold water or other liquids upon demand; preservation of biological specimens; cooling of protective clothing; and cosmetic applications. A portable cooling apparatus could have widespread utility in all these areas.

Most attempts to build a self-contained miniaturized cooling device have depended on the use of a refrigerant liquid stored at a pressure above atmospheric pressure, so that the refrigerant vapor could be released directly to the atmosphere. Unfortunately, many available refrigerant liquids for such a system are either flammable, toxic, harmful to the environment, or exist in liquid form at such high pressures that they represent an explosion hazard in quantities suitable for the intended purpose. Conversely, other available refrigerant liquids acceptable for discharge into the atmosphere (such as carbon dioxide) have relatively low heat capacities and latent heats of vaporization. As a result, some cooling devices which release carbon dioxide are more bulky than is commercially acceptable for a portable device.

An alternate procedure for providing a cooling effect in a portable device is to absorb or adsorb the refrigerant vapor in a chamber separate from the chamber in which the evaporation takes place. In such a system, the refrigerant liquid boils sunder reduced pressure in a sealed chamber and absorbs heat from its surroundings. The vapor generated from the boiling liquid is continuously removed from the first chamber and discharged into a second chamber containing a sorbent that absorbs or adsorbs the vapor.

A self-contained cooling apparatus comprising a chamber containing a vaporizable liquid, an evacuated chamber, and a chamber containing a sorbent for the liquid is disclosed in US-A-5,048,301. This patent describes a method of cooling wherein said liquid is supported by a wicking material, e.g. a highly hydrophilic polymer, coating the interior surface of said evaporation chamber.

US-A-5,7048,301 states a use of a wicking material to maximize the surface area from which boiling/evaporation may occur. However, nothing is known from this patent about how to handle the problem that while an evaporation the temperature at the coating/wall interface becomes higher, as a driving force is needed to move it through the wicking material layer. Since this may bring the cooling process to a practical coat, optimizing cooling apparatus is required.

### Summary of the Invention

The invention provides methods for the preparation of refrigerant materials used in evaporation/condensation-type self-refrigerating devices, and refrigerant materials which are produced with these methods. The invention is born out of the requirement for high efficiency vaporization of the refrigerant in such devices.

In one aspect, the invention provides a method for preparing an evaporator chamber for use in a portable, single-use, non-releasing evaporation-type refrigerator. The method includes forming a mixture of a volatile non-aqueous solvent (for example, short chain alcohols, including methanol) and a refrigerant dispersant (for example, acrylic-based polymers and copolymers, starch-graft polymers and copolymeric acrylates, including copolymer of acrylamide and an alkali salt of acrylic acid), depositing this mixture (which can be of from about 10 to about 70 %by weight of volatile solvent, and from about 30 to about 90 %by weight of polymeric material). On the inner surface of an evaporator chamber (in some instances, deposited on substantially the entire inner surface of said evaporator chamber, which, in some circumstances, is covered with a protective lacquer, and which also may be aluminum), over which the refrigerant dispersant is deposited), evaporating the volatile solvent to leave a substantially even coating of refrigerant dispersant on the inner surface of the evaporator chamber, loading the coating of refrigerant dispersant with a refrigerant (for example, water)to produce a substantially even layer of refrigerant intimately associated with the coating of refrigerant dispersant (the layer thickness of refrigerant and dispersant can be up to about 0.0762 cm (0.03 inches), removing gas from the evaporator chamber by evacuating the evaporator chamber (for example, to a pressure of not more than about 2.6664 Pa (20 milliTorr), and, sealing the evaporator chamber to prevent re-introduction of gas to the evaporator chamber. The evaporator chamber is also equipped with a means for controlling fluid communication between the interior of the evaporator chamber and an external vessel of lower pressure, for example a sorber chamber separated from the evaporator chamber by a valve and an actuator for preventing fluid communication between the sorber chamber and evaporator chamber until activation of the device. The evaporator chamber is also adapted to provide thermal transfer between its interior and exterior surfaces.

In another aspect, the invention provides a sealed and evacuated evaporator chamber including a gas-tight chamber evacuated to a pressure of not more than about 2.6664 Pa(20 milliTorr), a substantially even layer of refrigerant dispersant coating at least a portion of the inner surface of the gas-tight chamber, a substantially even layer of refrigerant adhered to that layer of refrigerant dispersant; and a means for controlling fluid communication between the interior of the chamber and a lower pressure vessel. The evaporator chamber can be equipped with a means for controlling fluid communication between the interior of the evaporator chamber and an external vessel of lower pressure. The evaporator chamber can be adapted to provide thermal transfer between its interior and exterior surfaces.

In another aspect, the invention provides a method of cooling a product with the portable, single-use, non-releasing evaporation-type refrigerator by operating the means for preventing refrigerant vapor flow, thereby permitting this flow. The pressure in the evaporator chamber is reduced subsequent to such operation, causing the refrigerant to vaporize and form a refrigerant vapor, the vapor is collected by the sorbent material in the sorber, and heat is generated in the sorbent. Then, by removing the vapor from the evaporator chamber by collecting the vapor until an equilibrium is reached, where the sorbent is substantially saturated or substantially all the refrigerant has been collected in the sorbent material and containing the heat generated in the sorbent within the sorber by means of the phase change-type heat sink material, the product is cooled.

The invention provides a self-contained and disposable refrigeration device. The device according to the invention does not vent a gas or vapor of any kind. There are no hazardous or toxic materials or components included in the device, and recycling of the materials of the device is facilitated. There are no pressurized gases present in the device and no environmentally objectionable materials such as unstable refrigerants. The device does not explode, even when consumed by fire, and is not flammable.

The methods of refrigerant dispersion provided by the invention are designed to allow for highly efficient and controlled vaporization of refrigerant in portable, single use, non-releasing evaporation-type refrigeration devices. The materials and methods of the present invention allow a substantially even layer of refrigerant to be vaporized from the inner surfaces of evaporator chambers of such refrigeration devices. This substantially even layer of refrigerant is maintained throughout the entire storage life of the refrigeration device despite the influence of gravity and the inevitable jarring that occurs in normal handling of such refrigeration devices.

As used in the specification, a "substantially even layer" refers to layers of refrigerant materials and refrigerant dispersants which are not more than about twice as thick in one location of the surface they cover as in another such location. The refrigerants are to be dispersed on refrigerant dispersants when dispersants are employed, otherwise the refrigerant materials are to be dispersed on the inner surfaces of evaporator chambers, whether the surface is coated or not. The refrigerant dispersants, when employed, are to be dispersed on the inner surfaces of evaporator chambers, whether the surface is coated with any type of protective coating or not. As used in the specification, "short chain" refers to organic molecules containing from one to four carbon atoms. As used in the specification, "copolymers" include both random and block copolymers.

Unless otherwise defined, all technical and scientific terms used herein have the same meaning as commonly understood by one of ordinary skill in the art to which this invention belongs. Although methods and materials similar or equivalent to those described herein can be used in the practice of the present invention, suitable methods and materials are described below. All publications, patent applications, patents, and other references mentioned herein are incorporated by reference in their entirety. In case of conflict, the present specification, including definitions, will control. In addition, the materials, methods, and examples are illustrative only and not intended to be limiting.

Other features and advantages of the invention will be apparent from the following detailed description, and from the claims.

### Brief Description of the Drawing

Fig. 1 is a schematic diagram of a refrigeration device useful in certain embodiments of the invention.
Fig. 2 is a schematic diagram of evaporation and cooling processes occurring at the evaporation chamber during operation of a particular embodiment of the refrigeration device.
Fig. 3 is a perspective view of a circular arrangement of evaporator fingers which can be used in particular embodiments of the invention.
Fig. 4 is a perspective view of a concentric circular arrangement of evaporator fingers which can be used in particular embodiments of the invention.
Fig. 5 is a perspective view of a cruciform arrangement of evaporator fingers which can be used in particular embodiments of the invention.
Fig. 6 is an overhead view of a particular embodiment of a refrigeration device according to the invention disposed in a cylindrical product container.

### Detailed Description of the Invention

The self refrigerating device used in the present invention includes three basic sections: an evaporator chamber containing a refrigerant, an evacuated sorbent chamber containing a sorbent and a heat sink material, and a means to prevent the flow of refrigerant vapor between the evaporator chamber and the sorbent chamber. This flow-preventing means is also adapted to allow the flow of refrigerant vapor between the evaporator and sorbent chambers, such as when the device is in operation. The functional relationships between these sections in a particular refrigeration device have been roughly described in U. S. Patent Nos. 5,197,302 and 5,048,301. The inventive devices are generally utilized in conjunction with a product to be cooled. These products and associated uses will be detailed after discussion of the device itself, which follows directly below.

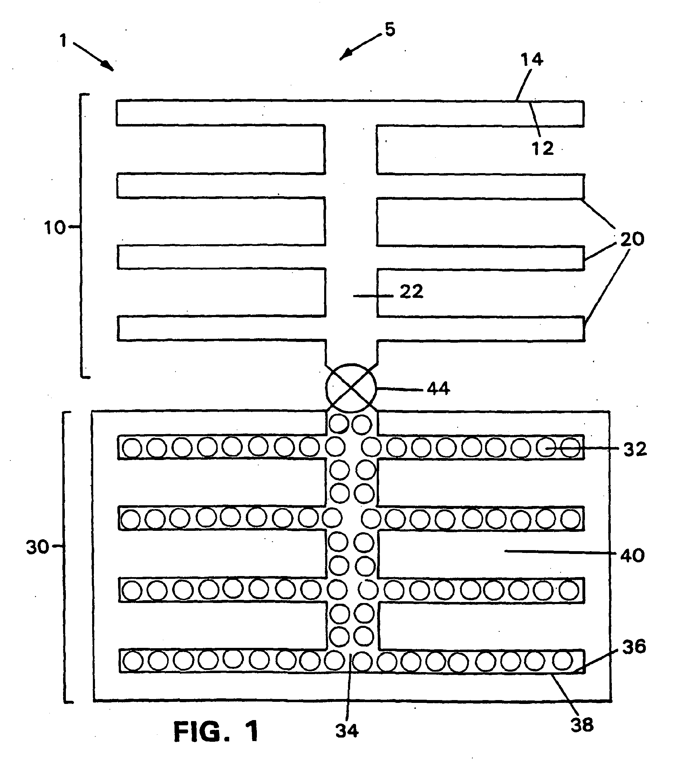

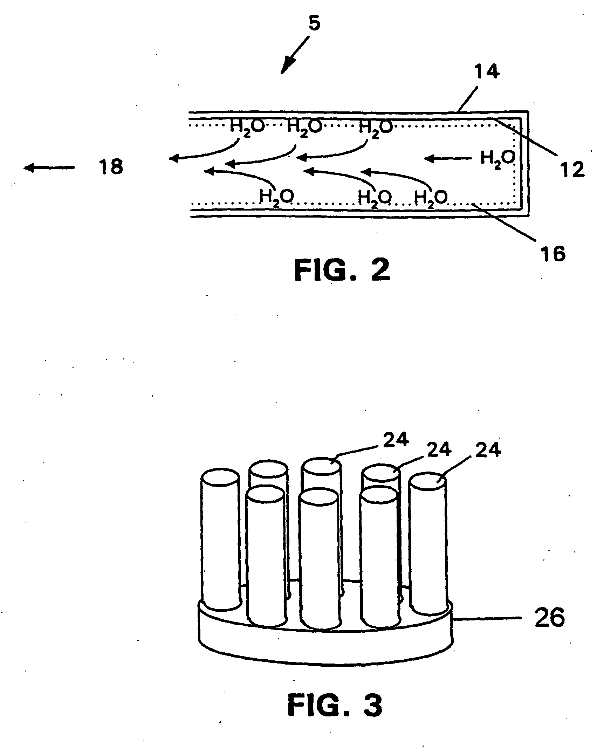

Regarding Fig. 1, a particular embodiment of refrigeration device 1 according to the general principles of the invention is displayed. This view shows product 5 which is to be cooled, in contact with evaporator 10, within which evaporation of a refrigerant takes place. Evaporator 10 comprises a chamber within which evaporation of a refrigerant takes place. This generally involves desorption of refrigerant from a surface during the operation of the device. Before the device is activated, the refrigerant is present in the evaporator, both in liquid and vaporous states. In devices such as the present invention, this desorption is driven by a pressure differential which is manifested when refrigerant vapor flow-preventing means 44 is operated. Thus, activation of the device amounts to allowing refrigerant vapor flow. As desorption takes place from the inner surface 12 of evaporator chamber 10, the outer surface 14 becomes cold. This in turn is able to cool product 5 in thermal contact with outer evaporator surface 14. This is represented in Fig. 2, showing the desorption of refrigerant (H₂O) proceeding in direction 18 leading toward lower pressure. This lower pressure is exposed to the refrigerant upon operation of the refrigeration device, as explained herein.

A wide variety of refrigerants are operative in the device. The general requirements are that the refrigerants be vaporizable and condensable at pressures which can be relatively easily attained in chambers. The refrigerant must also be compatible with the sorbent, that is, it must be capable of being absorbed or adsorbed by the sorbent. Suitable choices for refrigerants must also be those which are able to produce a useful change in temperature in a short time, meet government safety standards, and be relatively compace. The refrigerants used in the devices of the present invention preferably have a high vapor pressure at ambient temperature, so that a reduction of pressure will result in a high vapor production rate. The vapor pressure of the refrigerant at 20°C is preferably at least about 1199.9 Pa (9 mmHg). Moreover, for some applications (such as cooling of food products), the refrigerant should conform to applicable government standards in case any discharge into the surroundings, accidental or otherwise, occurs. Refrigerants with suitable characteristics for various uses of the invention include: various alcohols, such as methyl alcohol and ethyl alcohol; ketones or aldehydes, such as acetone and acetaldehyde; ammonia; water; short chain hydrocarbons and short chain halo-hydrocarbons; and freons, such as freon C318, 114, 21, 11, 114B2, 113 and 112. A preferred refrigerant is water.

In addition, the refrigerant may be mixed with an effective quantity of a miscible nucleating agent having a greater vapor pressure than the refrigerant to promote ebullition so that the refrigerant evaporates even more quickly and smoothly, and so that supercooling of the refrigerant does not occur. Suitable nucleating agents include ethyl alcohol, acetone, methyl alcohol, propyl alcohol and isobutyl alcohol, all of which are miscible with water. For example, a combination of a nucleating agent with a compatible refrigerant might be a combination of 5% ethyl alcohol in water. The nucleating agent preferably has a vapour pressure at 25°C of at least about 266.64 Pa (25 mmHg). Alternatively, solid nucleating agents may be used, such as the conventional boiling stones used in chemical laboratory applications.

The desorption processes taking place in the evaporator chamber are most efficiently carried out if the layer of refrigerant is as thin as possible, to the limit of a monolayer of refrigerant spread over as much of the inner desorption chamber surface as possible. These thin films maximize the area for surface evaporation. Multiple layers of refrigerant cause heat transfer through layered refrigerant molecules to a refrigerant molecule which is disposed at the innermost surface of the evaporator. This type of refrigerant overloading results in a temperature difference across the refrigerant layer that is larger than would exist if the layer were thinner. Thus, overloading decreases heat conduction, reducing the efficiency of evaporation. In preferred embodiments with thin layers of refrigerant, the layer thickness is reduced as the refrigeration device operates, decreasing the temperature difference across the layer, improving heat conduction processes as the refrigerator operates. If a refrigerant dispersant is employed, this is also desirably layered as thinly as possible across as much of the internal evaporator chamber surface as possible.

Fig. 2 shows the desorption of refrigerant (H₂O) proceeding in direction 18 leading toward lower pressure. This lower pressure is exposed to the refrigerant upon operation of the refrigeration device, as explained herein. The particular embodiment illustrated in Fig. 2 uses water as the refrigerant, but the principles discussed will be applicable to vaporizable refrigerants in general.

The refrigeration devices according to the invention contain a fixed amount of non-circulating refrigerant. If the amount of product to be cooled and the amount of cooling desired are known, the amount of heat to be removed is easily calculated. The amount of heat to be removed specifies precisely the amount of refrigerant which must be evaporated from the evaporator chamber. For example, if 8 fluid ounces (236 mL) of an aqueous liquid is to be cooled by 22°C, about 8.9 grams of water refrigerant is needed as a theoretical minimum. If heat leaks back into the system, more refrigerant will be required.

As mentioned above, the refrigerant desirably forms a layer on inner surface 12 of evaporator 10. This layer of refrigerant is preferably substantially evenly distributed over as much of surface 12 as possible. In certain embodiments of the invention, this will be accomplished with the aid of refrigerant dispersant 16, which is preferably deposited in a layer on inner evaporator chamber surface 12, and covers as much of this surface as possible. The layer of dispersant is adapted to allow refrigerant to be absorbed into and/or adsorbed onto it. Useful dispersants can absorb at least about 20 grams of refrigerant per gram of dispersant, preferred dispersants can absorb at least about 30 grams of refrigerant per gram of dispersant. In such an arrangement, heat flows from the product across the wall of the evacuator chamber, across a layer of refrigerant dispersant, and then vaporizes the surface refrigerant molecules from the dispersant

In selecting the refrigerant dispersant, any of a number of materials may be chosen, depending upon the requirements of the system and the particular refrigerant liquid being used. The refrigerant dispersant may be something as simple as cloth or fabric having an affinity for the refrigerant and a substantial wicking ability. Thus, for example, when the refrigerant is water, the refrigerant dispersant may be cloth, sheets, felt or flocking material which may be comprised of cotton, filter material, natural cellulose, regenerated cellulose, cellulose derivatives, blotting paper or any other suitable material. It is important that the refrigerant dispersant be able to be applied to a surface which is highly thermally conductive, such as a metal-containing surface.

The most preferred refrigerant dispersant would be highly hydrophilic, such as gel-forming polymers which would be capable of coating the interior surface of the evaporation chamber. Such materials preferably consist of alkyl, aryl and amino derivative polymers of vinyl-chloride acetate, vinylidene chloride, tetrafluoroethyl-ene, methyl methacrylate, hexaneodic acid, dihydro-2,5-furandione, propenoic acid, 1,3-isobenzofurandione, 1 h-pyrrole-2,5-dione or hexahydro-2-h-azepin-2-one. Also useful as refrigerant dispersants in the present refrigeration devices are random and block copolymers made up of monomers of alkyl, aryl and amino derivatives of propenoic acids, alkali metal propanoates, vinyl-chloride acetate, vinylidene chloride, tetrafluoroethyl-ene, methyl methacrylate, hexaneodic acid, dihydro-2,5-furandione, 1,3-isobenzofurandione, lh-pyrrole- 2,5-dione or hexahydro-2-h-azepin-2-one. Corn starch graft polymers and copolymers of alkyl, aryl and amino derivative polymers of vinylchloride acetate, vinylidene chloride, tetrafluoroethyl-ene, methyl methacrylate, hexaneodic acid, dihydro-2,5-furandione, propenoic acid, 1,3-isobenzofurandione, 1 h pyrrole-2,5-dione or hexahydro-2-h-azepin-2-one are also suitable for use in the present invention. Other useful dispersants are members of the classes of saponified starchpolyacrylonitrile graft copolymers, crosslinked/-grafted cellulose, saponified vinyl acetate-acrylic acid copolymers, starch grafted polyvinyl acetate, and alkali metal salts of polyacrylate hydrocolloid particles. Useful refrigerant dispersants are commercially available, including poly (2-propenamide-co-2-propenoic acid, sodium salt), sold as WATER LOCK G-400 (Grain Processing Corp., Muscatine, Iowa), and starch graft poly (2-propenamide-co-2-propenoic acid, mixed sodium and aluminum salt), sold as WATER LOCK D-223 (Grain Processing Corp.).

The particle or grain size of such materials has been observed to be of some importance, with smaller grains generally giving better results. In some embodiments, polymeric materials which are able to pass 98%of their particles through a mesh size of at least 40 are used. In other embodiments, the mesh size through which 98%of the polymer particles pass is 80 mesh. Suitable dispersants are able to absorb at least about 300 grams of refrigerant per gram of dispersant. Preferred dispersants are able to absorb at least about 400 grams of refrigerant per gram of dispersant, and most preferred dispersants are able to absorb at least about 450 grams of refrigerant per gram of dispersant.

The refrigerant dispersant may be sprayed, flocked, or otherwise coated or applied onto the interior surface of the evaporator chamber. In a particular embodiment, the refrigerant dispersant is electrostatically deposited onto that surface. In another embodiment, the refrigerant dispersant is mixed with a suitable solvent, such as a volatile non-aqueous solvent, and then the solution is applied to the interior surface of the first chamber. The volatile solvent can be chosen from short chain alcohols, short chain esters, and short chain ethers, acetone, and similar solvents with slight to moderate polarity.

The application of refrigerant dispersant should be carried out to produce a layer of refrigerant and dispersant which is of a substantially uniform thickness. This thickness should range from about 0.0381 to about 0.1016 cm (about 0.015 to about 0.040 inches). If the refrigerant and dispersant layer is too thick or to too thin, the layer will not properly adhere to the interior surface of the evaporator. The inner surfaces of an evaporator chamber may be coated with a thin (up to about 2.54 µm (0.1 mil)) of a lacquer film, the nature of which will be apparent to those of skill in the beverage packaging industry. This lacquer layer can become necessary for the successful application of some refrigerant dispersants that are degraded by metal ions which can be present in some inner surfaces of evaporator chambers. The presence of this thin layer of lacquer does not present a problem with respect to heat transfer into the evaporator chamber, or adherence of the refrigerant dispersant to the inner surfaces.

When the refrigerant dispersant is applied by mixing solvent and dispersant, the thickness of this layer is primarily determined by the amount of dispersant which is applied to the evaporator chamber inner surface, and also by the amount of refrigerant which is applied to this surface. As the ratio of volatile solvent to refrigerants dispersant decreases, the thickness of the deposited dispersant layer increases. Suitable ranges for the volatile solvent to dispersant ratios are from about 50 or 100 to about 1 by weight.

Upon mixing the volatile solvent and dispersant, the mixture is applied to the inner surface of the evaporator chamber of the refrigeration device of the invention. As much of this inner surface as possible is coated with the mixture. The volatile solvent is then removed, most conveniently by volatilization, such as with heat or reduced pressure. The solvent is removed to dryness, leaving a residue of refrigerant dispersant which can be loaded with refrigerant.

In another embodiment, the refrigerant dispersant is able to control any violent boiling in the evaporator and thus reduces any liquid entrainment in the vapor phase. In such an embodiment, the refrigerant dispersant is a polymer forming a, porous space-filing or sponge-like structure, and it may fill all or part of the evaporator chamber.

Upon loading the dispersant with refrigerant, the combination is required to allow the release of refrigerant upon reduction in pressure. The reduction in pressure occurs when the refrigeration device is activated. The dispersants and methods of dispersing refrigerants discussed herein can be used, not only in the refrigeration devices disclosed herein, but also in other refrigeration devices, such as those disclosed in U. S. Patent Nos. 5,197,302 and 5,048,301.

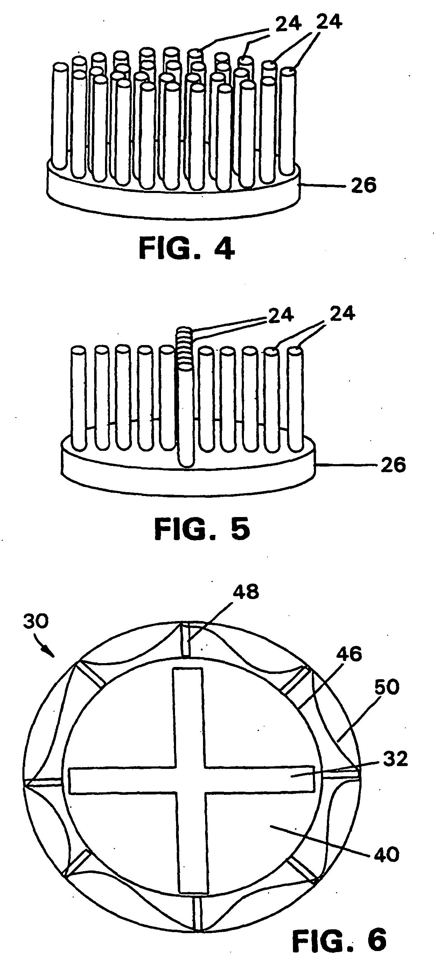

In the particular embodiment shown in Fig. 1, evaporator 10 has fins 20 and a central passage 22, although a wide variety of shapes and configurations of the evaporator are possible. If fins are used, they can be of a large variety of configurations, and the central passage may be omitted or substantially shortened. In other embodiments, evaporator 10 takes the form of a number of hollow finger-like elements (fingers 24) which do not branch from a central passage as do fins 20, but pass into finger base 26, shown in Figs. 4-6. Base 26 can contain short passages (not shown) to connect the interior of hollow fingers 24 together to form a short central passage. Alternatively, base 26 can be substantially hollow, with a central outlet leading to the means for preventing/allowing vapor flow to the absorber. Fingers 24 can be arranged in a circle (eight fingers are shown in this arrangement in Fig. 3, but any number could be so arranged), a number of concentric circles (shown in Fig, 4), in a cruciform arrangement (shown in Fig. 5), or a more random arrangement. The general aim is to provide for efficient heat transfer from the bulk medium to inner evaporator 12, by maximizing the area of this surface. The evaporator is desirably also reasonably simple to manufacture and assemble. Additionally, refrigerant vapor flow paths inside the evaporator chamber are desirably adequate to prevent excessive pressure drops in the low density vapor flows.

Normal boiling processes (ebullition), which are initiated by streams of tiny bubbles rising from discrete and easily visible spots on surfaces, require nucleation sites consisting of reentrant cavities containing non-condensable gases such as air. The evaporator chamber in refrigerators according to the present invention is subjected to partial evacuation, effectively removing nucleation sites from the internal surfaces of the evaporator chamber, and degasses the refrigerant as well. Thus, refrigerant molecules subjected to the evacuator chamber preparation methods (disclosed herein) required by refrigerators of the present invention, when exposed to the reduced pressure present in a properly prepared sorbent chamber evaporate from the surface of a quiescent pool of refrigerant. Heat transfer in such a pool is subject to the same limitations of conduction and convection as in bulk fluids.

The refrigerant vapor pressure within the evaporator chamber at the begimiing and end of the cooling process can be determined from the equilibrium vapor pressure-temperature function for water, based on the expected beverage temperatures and temperature differences required for heat transfer.

It is desirable to carry out an evacuation of the refrigerant-loaded evaporator chamber prior to assembly. The evacuation should be limited to pressures above or equal to the vapor pressure of water at the temperature at which the evacuation is carried out. For example, at room temperature with water as the refrigerant, the evacuation of the refrigerant-loaded evaporator should be carried out to pressures of about 20 Ton-. This evacuation serves to sweep contaminants such as air, wash solvents and the like from the evaporator chamber.

Returning to Fig. 1, there is also shown sorber 30. This section of the refrigeration device includes sorbent 32, which is disposed throughout the interior of sorbent chamber 34. Also included in sorber 30 is heat sink 40. Refrigerant vapor which is formed upon operation of the refrigeration device moves from the evaporator chamber into sorbent chamber 34, carrying heat. This heat is deposited into finite capacity sorbent 32, and further deposited into finite capacity heat sink 40.

The sorbent receives heat not only from the latent heat of vaporization resulting from condensation of the refrigerant vapor, but also from the chemical reaction heat released when refrigerant is combined with the sorbent. Sorbent 32 is in thermal contact with heat sink 40, via internal surface 36 and external surface 38 of sorbent chamber 34. This thermal contact desirably results in highly efficient heat transfer from sorbent 32 to heat sink 40. This heat must be stored in the heat sink in such a manner that it does not leak back into the product during the time that cold product is required.

Gas molecules tend to adhere to surfaces. Sorbent materials can have porous structures with a very large surface area per unit volume. The volume of noncondensable materials becomes significant in systems requiring final pressures below 29.33 to 66.66 Pa (220 to 500 milliTorr). As an example, a container filled with molecular sieve (a typical sorbent) can be evacuated at room temperature to a pressure of from about 0.133 to 0.666 Pa (1 to 5 milliTorr) day after day, but will rise in pressure over a few hours to as much as 66.66 Pa (500 milliTorr) between serial evacuations. This rise is attributable to the gradual desorption of sorbed gas molecules. It is unlikely that an economical high production rate refrigeration device could incorporate such a process in its manufacture. Since the sorption process in the sorbent acts as a pump to draw vapor from the evaporator during operation of the device, the refrigerant vapor pressure over the sorbent must at all times be well below the equilibrium saturation pressure of refrigerant in the evaporator. Essential to the usefulness of sorbents in the refrigeration devices discussed herein is the removal of noncondensable gases from the refrigeration system. The presence of non-condensable gases must be avoided anywhere in the system, for such gases are carried by the flowing refrigerant vapor into the sol-bent, or could be already present in the sorbent. The presence of non-condensable gases forms a barrier through which refrigerant vapor must diffuse before it can condense. If such gases are present, the refrigeration device will operate at a rate which is limited by the diffusion barrier.

In a similar way, the sorbent must be made as free of condensable gases as possible before the device is operated. The volume of the sorbent is desirably minimized for some preferred embodiments of the invention. Thus, competition between refrigerant and a condensable gas already present in the sorbent will also limit the operation of the refrigeration device to levels below optimum performance. Methods for preparing sorbents for use in refrigeration devices are detailed in U. S. Patent Application entitled "Preparation of Refrigerant Materials ", filed contemporaneously herewith.

The sorbent chamber into which the sorbent is to be loaded also includes a heat sink material. The function of the heat sink material is to absorb heat released by the sorbent, and to prevent leakage of this heat back to the product which is to be cooled by the refrigeration device. Thus, it is critical to maximize the thermal contact between the sorbent and the heat sink material.

Materials which are suitable as sorbents are those which have aggressive refrigerant vapor-binding properties, low chemical reaction heats, and are not explosive, flammable or toxic. These materials are available in a variety of forms, including flakes, powders, granules, as well as supported on inert shapes or bound with clays. It is desirable that the material have sufficient vapor flow passages through it that refrigeration performance is not limited by the passage of refrigerant vapor through the sorbent, Additionally, the sorbent must be able to transfer heat to the heat sink material, and thus be in good thermal contact with the inner surface of the sorbent chamber. Preferred sorbents for use in the present refrigeration device include flaked sorbent or clay-supported sorbent. The latter is available in a wide variety of shapes, including spheres, chips, rectangular solids.

Synthetic zeolite materials comprising metallic alumino silicates can be used in the present refrigeration devices. These materials include a water absorbing mineral supported by a porous inert clay. Such materials must be heated to drive absorbed and adsorbed water from them. The amount of sorbent required to absorb refrigerant vapor depends on the sorption capability of the sorbent for the refrigerant vapor. This is generally a function of temperature. Within the sorbent temperature range of interest, water absorption ranges from about 10% to about 25% by weight. For an 8 ounce, 22°C temperature drop system, 45 to 90 grams of sorbent would be required, an amount which also depends on the effectiveness of the heat sink.

The refrigeration device of the present invention also includes a heat sink located in the sorber. The heat sink is in thermal contact with the outer surface of the sorbent chamber, and thus is in thermal contact with the sorbent.

The heat-removing material may be one of three types: (1) a material that undergoes a change of phase when heat is applied; (2) a material that has a heat capacity greater than the sorbent; or (3) a material that undergoes an endothermic reaction when brought in contact with the liquid refrigerant.

Suitable phase change materials for particular applications may be selected from paraffin, naphthalene, sulphur, hydrated calcium chloride, bromocamphor, cetyl alcohol, cyanimede, eleudic acid, lauric acid, hydrated sodium silicate, sodium thiosulfate pentahuydrate, disodium phosphate, hydrated sodium carbonate, hydrated calcium nitrate, Glauber's salt, potassium, sodium and magnesium acetate. The phase change materials remove some of the heat from the sorbent material simply through storage of sensible heat. In other words, they heat up as the sorbent heats up, removing heat from the sorbent. However, the most effective function of the phase change material is in the phase change itself. An extremely large quantity of heat can be absorbed by a suitable phase change material in connection with the phase change (i.e., change from a solid phase to a liquid phase, or change from a liquid phase to a vapor phase). There is typically no change in the temperature of the phase change material during the phase change, despite the relatively substantial amount of heat required to effect the change; which heat is absorbed during the change. Phase change materials which change from a solid to a liquid, absorbing from the sorbent their latent heat of fusion, are the most practical in a closed system. However, a phase change material changing from a liquid to a vapor is also feasible. Thus, an environmentally-safe liquid could be provided in a separate container (not shown) in contact with the sorbent material (to absorb heat therefrom)but vented in such a way that the boiling phase change material carries heat away from the sorbent material and entirely out of the system.

Another requirement of any of the phase change materials is that they change phase at a temperature greater than the expected ambient temperature of the material to be cooled, but less than the temperature achieved by the sorbent material upon absorption of a substantial fraction (i.e., one-third or one-quarter) of the refrigerant liquid. Thus, for example, in most devices according to the present invention which are intended for use in cooling material such as food or beverage, the phase change material could change phase at a temperature above about 30°C., preferably above 35°C, but preferably below about 70°C., and most preferably below 60°C. Of course, in some applications, substantially higher or lower phase change temperatures may be desirable. Indeed, many phase change materials with phase change temperatures as high as 90°C., or 110°C may be appropriate in certain systems.

Materials that have a heat capacity greater than that of the sorbent simply provide a thermal mass in contact with the sorbent that does not effect the total amount of heat in the system, but reduces the temperature differential between the material being cooled and the sorber, with two results.

When heat is added to a material which does not melt or evaporate as a result of that heat addition, the heat can be sensed by an increase in temperature. By contrast, if the material undergoes a phase change, from solid to liquid for example, the material can absorb heat without a sensible temperature change. The heat energy instead goes into the phase change of the material. The hidden heat is referred to as latent heat. Heat sink materials useful in the present refrigeration device are all melting materials, they absorb significant latent heat, and are able to keep the sorbent at a more even temperature. The cooler the sorbent, the more vapor it can condense, so it is the combined volume of heat sink and sorbent that is of direct interest. A low density material and a high density material may, in principle, has equal total heat capacity, but a refrigeration device utilizing the low density material will require more volume. This increased volume can be undesirable in certain critical applications.

The refrigeration device of the present invention also includes a heat sink located in the absorber. The heat sink is in thermal contact with the outer surface of the sorbent chamber, and thus is in thermal contact with the sorbent.

The amount of heat sink material required depends on the amount of refrigerant vapor to be absorbed by the sorbent, the chemical reaction heat of the sorbent and refrigerant vapor binding reaction, the specific heat of the heat sink (or specific heat-latent heat combination in a phase-change material), and the chosen final temperature of the absorber. Since most sorbents decrease in refrigerant vapor sorption capability as the temperature increases, there is a ratio of sorbent to heat sink which yields minimum system mass, and which depends on the properties of the chosen pair.

Suitable phase change materials and methods for their preparation are detailed in U. S. Patent Application entitled Preparation of Heat Sink Materials, filed contemporaneously herewith.

The refrigeration device also includes a means for preventing refrigerant vapor flow from the evaporator chamber to the sorbent chamber before operation of the device. Upon activation of this means, which subsequently allows the flow of refrigerant vapor from the evaporator chamber to the sorbent chamber, desorption and cooling of product begins. The means for preventing vapor flow can take the form of any of the various types shown in the prior art. The means can be located at any location between the evaporator chamber and the sorber, so long as it prevents refrigerant vapor, or vapor of any kind from being sorbed by the sorbent. However, if the entire refrigeration device is contained within a pressurized container, a pressure responsive valve can be used which can actuate the device upon the release of the pressure within the container.

The device can be constructed of a variety of materials, with the restriction that certain portions must be able to afford good thermal contact with certain other portions. These portions must be made of a relatively good thermal conductor such as a metal or metallic material. Preferred materials for the evaporator chamber, and sorber include metals such as aluminum, copper, tin, steel, and metal alloys such as aluminum alloy. For some applications, corrosion protection will be required on the outer surface of the evaporator. Corrosion protection can include a thin coating of a lacquer specially designed for that purpose. Those of skill in the art will be able to provide suitable materials. The thickness of such coatings generally does not interfere with thermal transfer, but the choice of corrosion protectant will be dictated by the affect such protectant has on the heat transfer. Portions of the refrigerator which are not crucial to thermal transfer include the means for preventing/allowing refrigerant vapor flow. This portion can be made of a polymeric material, such as a thermoplastic material.

The refrigerators are subjected to external pressure, since they are evacuated internally. In order to avoid the necessity of fabricating a heavy structure, self-supporting arch designs or ribbed designs can be used. Materials with similar gauge to those employed in the construction of carbonated beverage cans are able to find application in the construction of the inventive refrigerators. A particular embodiment of a self-supporting arch design is depicted in Fig. 6. Sorber 30 is shown having sorber 32 and heat sink material 40 included in its interior. On outer surface 46 of sorber 30 are a series of spacers 48. They generally continue around the circumference of surface 46, but some are omitted from Fig. 6 for clarity. There is intermediate material 50 attached to spacers 48 across the entire circumference of surface 46. The assembly is meant to be placed in a cylindrical product container, with the terminal portions of spacers 48 abutting the inner walls of the cylindrical product container. This assembly assists the sorber to maintain its structure, preventing collapse from pressure inequalities between the interior and exterior of the sorber.

The product which can be cooled can be a liquid, gas or solid, as long as good thermal contact is made with the outer surface of the evaporator. Preferred products to be cooled are liquids or gases, most preferably liquids. Among the liquids which can be cooled using the refrigeration device of the invention are those comprising water, such as those comprising at least 20% water, those comprising at least 40% water, and those comprising at least 60% water. Included among such water-containing liquids are water itself, milk, fruit and vegetable juices, soft-drinks, beer, wine, and mixed drinks. These products can be contained in vessels of various sizes and shapes, and those made of various materials. As mentioned above, certain applications will involve the cooling of liquids which can, over lengthy storage times, corrode the containers in which they are stored. Corrosion protection, known to those skilled in the art, is available in such instances.

The invention also includes a method of using the refrigeration device described herein. The method includes the step of providing a refrigeration device of the type set fort herein, opening the means for preventing vapor flow, whereby the pressure in the evaporator is reduced, causing the refrigerant to be vaporized, which vapor is collected by the sorbent, removing the vapor from the evaporator by collecting the vapor until an equilibrium condition is reached wherein the sorbent is substantially saturated or substantially all the refrigerant originally in the evaporator chamber has been collected in the sorbent, and simultaneously removing heat from the sorbent by means of the heat sink material described above. The process is preferably a one-shot process; thus, opening the means for preventing/allowing flow is preferably irreversible. At the same time, the system is a closed system; in other words, the refrigerant does not escape from the system, and ther is no means by which the refrigerant or the sorbent may escape either the evaporator chamber or the sorber.

### Other Embodiments

It is to be understood that while the invention has been described in conjunction with the detailed description thereof, the foregoing description is intended to illustrate and not limit the scope of the invention, which is defined by the scope of the appended claims.

## Claims

1. A method for preparing an evaporator chamber (10) for use in a portable, single-use, non-releasing evaporation-type refrigerator, the method comprising:
(A) forming a mixture of volatile non-aqueous solvent and a refrigerant dispersant;
(B) depositing said mixture on the inner surface (12) of an evaporator chamber (10);
(C) evaporating said volatile solvent to leave a substantially even coating of refrigerant dispersant on said inner surface of said evaporator chamber (10);
(D) loading said coating of refrigerant dispersant with refrigerant water to produce a substantially even layer not more than about 0.0762 cm (0.03 inches) thick of refrigerant water intimately associated with said coating of refrigerant dispersant;
(E) removing gas from the evaporator chamber by evacuating said evaporator chamber (10); and
(F) sealing the evaporator chamber (10) to prevent re-introduction of gas to said evaporator chamber (10),
wherein the evaporator chamber (10) is equipped with a means (44) for controlling fluid communication between the interior of the evaporator chamber (10) and an external vessel of lower pressure, and wherein the evaporator chamber (10) is adapted to provide thermal transfer between its interior and exterior surfaces (14).

2. The method of claim 1, further comprising a sorber chamber (30) separated from the evaporator chamber (10) by a means (44) for preventing fluid communication between the sorber chamber and evaporator chamber until activation of the device.

3. The method of claim 1, wherein the volatile solvent is selected from the group consisting of short chain alcohols.

4. The method of claim 1, wherein the refrigerant dispersant is a polymeric material selected from the group consisting of acrylic-based polymers and copolymers, starch-graft polymers and copolymeric acrylates.

5. The method of claim 1, wherein the mixture comprises from about 10 to about 70% by weight of volatile solvent, and from about 30 to about 90% by weight of polymeric material.

6. The method of claims 1, wherein the mixture is deposited on substantially the entire inner surface (12) of said evaporator chamber (10).

7. The method of claim 1, wherein substantially all of the inner surface (12) of the evaporator chamber (10) is covered with a protective lacquer, over which the refrigerant dispersant is deposited.

8. The method of claim 1, wherein said evaporator chamber (10) is evacuated to a pressure of not more than about 2.6664 Pa (20 mTorr).

9. The method of claim 1, wherein:
A) forming the mixture comprises forming a mixture of a methanol and a copolymer of acrylamide and an alkali salt of acrylic acid;
B) depositing said mixture comprises depositing on a lacquer-protected inner surface (12) of evaporator chamber, wherein said evaporator chamber is made of aluminum;
C) evaporating said volatile solvent comprises evaporating said methanol to leave a coating of said copolymer on said inner surface (12) of said evaporator chamber (10);
D) loading said coating of refrigerant dispersant comprises loading said coating of copolymer with water to a combined water/copolymer layer thickness of not more than about 0.0762 cm (0.03 inches);
E) evacuating said evaporator chamber (10) comprises evacuating to a pressure of not more than about 2.6664 Pa (20 mTorr);
wherein the means for controlling fluid communication is further adapted to control fluid communication between the interior of the evaporator chamber (10) and a sorber (30), which is maintained at a pressure of not more than about 1.9998 Pa (15 mTorr).

10. A sealed and evacuated evaporator chamber comprising:
A) a gas-tight chamber (10) evacuated to a pressure of not more than about 2.6664 Pa (20 mTorr);
B) a substantially even layer of refrigerant dispersant coating at least a portion of the inner surface (12) of said gas-tight chamber (10);
C) a substantially even layer of refrigerant water, not more than 0.0762 cm (about 0.03 inches) thick, adhered to said layer of refrigerant dispersant; and
D) a means (44) for controlling fluid communication between the interior of said chamber (10) and a lower pressure vessel (30),
wherein the evaporator chamber is equipped with a means for controlling fluid communication between the interior of the evaporator chamber and an external vessel of lower pressure, and wherein the evaporator chamber is adapted to provide thermal transfer between its interior and exterior surface.

11. The evaporator chamber of claim 10, wherein the refrigerant is water.

12. The evaporator chamber of claim 10, wherein the refrigerant dispersant is a copolymer of acrylamide and an alkali metal salt of acrylic acid.

13. The evaporator chamber of claim 10, wherein the means (44) for controlling fluid communication comprises a frangible seal and an actuator.

14. An evaporator chamber produced according to the method of claim 1.

15. A method of cooling a product with a portable, single-use, non-releasing evaporation-type refrigerator that produces refrigerant vapor during evaporative heating, the method comprising:
A) providing a portable, single-use, non-releasing evaporation-type refrigerator comprising:
1) an evaporator chamber (10) in thermal contact with a product (5) to be cooled, wherein the evaporator chamber (10) comprises a refrigerant water, dispersed in a substantially even layer not more than about 0.0762 cm (0.03 inches) thick, and in intimate contact with a substantially even layer of polymeric refrigerant dispersant selected from the group consisting of acrylic-based polymers and copolymers, starch-graft polymers and copolymeric acrylates, wherein the evaporator chamber (10) is evacuated to a pressure of not more than about 2.6664 Pa (20 mTorr);
2) an evacuated sorber (30) comprising a sorbent in thermal contact with a phase change-type heat sink (40) material;
3) a means (44) for preventing refrigerant vapor flow between the evaporator chamber (10) and the sorber (30), until operation of the device;
B) operating the means (44) for preventing refrigerant vapor flow, thereby permitting said flow, whereby the pressure in the evaporator chamber (10) is reduced, causing the refrigerant water to vaporize and form a refrigerant vapor, the vapor collected by the sorbent (32) material in the sorber (30), and heat is generated in the sorbent (32);
C) removing the vapor from the evaporator chamber (10) by collecting the vapor until an equilibrium is reached, wherein the sorbent (32) is substantially saturated or substantially all the refrigerant has been collected in the sorbent (32) material; and
D) containing the heat generated in the sorbent (32) within the sorber (30) by means of the phase change-type heat sink (40) material.

## Patentansprüche

1. Verfahren zur Herstellung einer Verdampferkammer (10) zur Verwendung in einer tragbaren, nicht-freisetzenden Kühlvorrichtung vom Verdampfungs-Typ für den einmaligen Gebrauch, wobei das Verfahren umfasst:
(A) Bilden eines Gemisches aus einem flüchtigen, nicht-wässrigen Lösungsmittel und einem Kühlmittel-Dispergiermittel;
(B) Abscheiden des Gemisches auf der inneren Oberfläche (12) einer Verdampferkammer (10);
(C) Verdampfen des flüchtigen Lösungsmittels, um eine im Wesentlichen gleichmäßige Beschichtung aus dem Kühlmittel-Dispergiermittel auf der inneren Oberfläche der Verdampferkammer (10) zu belassen;
(D) Befüllen der Beschichtung aus dem Kühlmittel-Dispergiermittel mit Kühlwasser, um eine im Wesentlichen gleichmäßige Schicht des Kühlwassers bereitzustellen, die nicht mehr als etwa 0,0762 cm (0,03 inches) dick ist und mit der Beschichtung aus dem Kühlmittel-Dispergiermittel eng verbunden ist;
(E) Entfernen von Gas aus der Verdampferkammer durch Evakuieren der Verdampferkammer (10); und
(F) Versiegeln der Verdampferkammer (10) zur Verhinderung des Wiedereintritts von Gas in die Verdampferkammer (10),
wobei die Verdampferkammer (10) mit einem Mittel (44) versehen ist zur Kontrolle der Fluidverbindung zwischen dem Inneren der Verdampferkammer (10) und einem äußeren Behälter mit niedrigerem Druck, und wobei die Verdampferkammer (10) dafür geeignet ist, dass Wärmeübertragung zwischen den inneren und äußeren Oberflächen (14) bereitgestellt wird.

2. Verfahren gemäß Anspruch 1, umfassend eine Sorptionskammer (30), die von der Verdampferkammer (10) getrennt ist durch ein Mittel (44) zur Kontrolle der Fluidverbindung zwischen der Sorptionskammer und Verdampferkammer bis zur Aktivierung der Vorrichtung.

3. Verfahren gemäß Anspruch 1, wobei das flüchtige Lösungsmittel ausgewählt ist aus der Gruppe bestehend aus kurzkettigen Alkoholen.

4. Verfahren gemäß Anspruch 1, wobei das Kühlmittel-Dispergiermittel ein Polymermaterial ist, ausgewählt aus der Gruppe bestehend aus Polymeren und Copolymeren auf Acrylbasis, Stärke-Pfropfpolymeren und copolymeren Acrylaten.

5. Verfahren gemäß Anspruch 1, wobei das Gemisch etwa 10 bis etwa 70 Gew.-% des flüchtigen Lösungsmittels und von etwa 30 bis etwa 90 Gew.-% des Polymermaterials umfasst.

6. Verfahren gemäß Anspruch 1, wobei das Gemisch auf im Wesentlichen der gesamten inneren Oberfläche (12) der Verdampferkammer (10) abgeschieden ist.

7. Verfahren gemäß Anspruch 1, wobei im Wesentlichen die ganze innere Oberfläche (12) der Verdampferkammer (10) beschichtet ist mit einem Schutzlack, auf dem das Kühlmittel-Dispergiermittel abgelegt wird.

8. Verfahren gemäß Anspruch 1, wobei die Verdampferkammer (10) auf einen Druck von nicht mehr als etwa 2,6664 Pa (20 mTorr) evakuiert wird.

9. Verfahren gemäß Anspruch 1, wobei:
A) das Bilden des Gemisches das Bilden eines Gemisches aus Methanol und Copolymer aus Acrylamid und einem Alkalisalz einer Acrylsäure umfasst;
B) das Abscheiden des Gemisches das Ablegen auf der mit einem Lack geschützten, inneren Oberfläche (12) der Verdampferkammer umfasst, wobei die Verdampferkammer aus Aluminium besteht;
C) das Verdampfen des flüchtigen Lösungsmittels das Verdampfen des Methanols umfasst, um die Beschichtung aus dem Copolymer auf der inneren Oberfläche (12) der Verdampferkammer (10) zu belassen;
D) das Befüllen der Beschichtung aus dem Kühlmittel-Dispergiermittel das Befüllen der Beschichtung aus Copolymer mit Wasser umfasst, bis eine kombinierte Wasser/Copolymer-Schicht mit einer Dicke von nicht mehr als etwa 0,0762 cm (0,03 inches) entsteht;
E) das Evakuieren der Verdampferkammer (10) das Evakuieren auf einen Druck von nicht mehr als etwa 2,6664 Pa (20 mTorr) umfasst;
wobei das Mittel zur Kontrolle einer Fluidverbindung weiterhin geeignet ist, die Fluidverbindung zwischen dem Innenren der Verdampferkammer (10) und einer Sorptionskammer (30), in welcher Druck von nicht mehr als etwa 1,9998 Pa (15 mTorr) gehalten wird, zu kontrollieren.

10. Eine versiegelte und evakuierte Verdampferkammer, umfassend:
A) eine gasdichte Kammer (10), evakuiert auf einen Druck von nicht mehr als etwa 2,6664 Pa (20 mTorr);
B) eine im Wesentlichen gleichmäßige Schicht eines Kühlmittel-Dispergiermittels, die mindestens einen Teil der inneren Oberfläche (12) der gasdichten Kammer (10) bedeckt;
C) eine im Wesentlichen gleichmäßige Schicht aus Kühlwasser, nicht mehr als 0,0762 cm (etwa 0,03 inches) dick, verbunden mit der Schicht aus Kühlmittel-Dispergiermittel; und
D) ein Mittel (44) zur Kontrolle einer Fluidverbindung zwischen dem Innenren der Verdampferkammer (10) und dem Behälter mit niedrigerem Druck (30),
wobei die Verdampferkammer mit einem Mittel ausgestattet ist, das die Fluidverbindung zwischen dem Inneneren der Verdampferkammer und dem äußeren Behälter mit niedrigerem Druck kontrolliert, und wobei die Verdampferkammer dafür geeignet ist, dass Wärmeübertragung zwischen den inneren und äußeren Oberflächen bereitgestellt wird.

11. Verdampferkammer gemäß Anspruch 10, wobei das Kühlmittel Wasser ist.

12. Verdampferkammer gemäß Anspruch 10, wobei das Kühlmittel-Dispergiermittel ein Copolymer aus Acrylamid und einem Alkalisalz einer Acrylsäure ist.

13. Verdampferkammer gemäß Anspruch 10, wobei das Mittel (44) zur Kontrolle der Fluidverbindung eine aufbrechbare Versiegelung und ein Betätigungsglied umfasst.

14. Verdampferkammer, die nach dem Verfahren gemäß Anspruch 1 hergestellt ist.

15. Verfahren zur Kühlung eines Produktes mit einer tragbaren, nicht-freisetzenden Kühlvorrichtung vom Verdampfungs-Typ für den einmaligen Gebrauch, welcher einen Kühldampf während der Verdampfungserwärmung bereitstellt, wobei das Verfahren umfasst:
A) Vorsehen einer tragbaren nicht-freisetzenden Kühlvorrichtung vom Verdampfungs-Typ, umfassend:
1) Verdampferkammer (10), welche sich in Wärmekontakt befindet mit einem zur Kühlung bereitstehenden Produkt, wobei die Verdampferkammer (10) Kühlwasser umfasst, dispergiert in einer im Wesentlichen gleichmäßigen Schicht, die nicht mehr als etwa 0,0762 cm (0,03 inches) dick ist, und in engem Kontakt mit einer im Wesentlichen gleichmäßigen Schicht von polymerem Kühlmittel-Dispergiermittel, das ausgewählt ist aus der Gruppe bestehend aus Polymeren und Copolymeren auf Acrylbasis, Stärke-Pfropfpolymeren und copolymeren Acrylaten, wobei Verdampferkammer (10) auf einen Druck von nicht mehr als etwa 2,6664 Pa (20 mTorr) evakuiert wird;
2) eine evakuierte Sorptionskammer (30), umfassend ein Sorptionsmittel, welches sich in Wärmekontakt mit einem Phasenwechsel-Kühlkörpermaterial (40) befindet;
3) ein Mittel (44), welches eine Kühldampfströmung zwischen der Verdampferkammer (10) und der Sorptionskammer (30) bis zur Inbetriebnahme der Vorrichtung verhindert;
B) Inbetriebnahme des Mittels (44) zur Verhinderung der Kühldampfströmung, und dadurch ermöglichte Strömung, wobei der Druck in der Verdampferkammer (10) reduziert wird, wodurch Verdampfen des Kühlwassers und Bildung des Kühldampfes hervorgerufen werden, der Dampf durch das Sorptionsmittel (32) in der Sorptionskammer (30) aufgenommen wird, und Wärme im Sorptionsmittel (32) erzeugt wird;
C) Entfernen des Dampfes aus der Verdampferkammer (10) durch die Aufnahme des Dampfes, bis das Gleichgewicht erreicht ist, wobei das Sorptionsmittel (32) im Wesentlichen gesättigt ist oder im Wesentlichen das ganze Kühlmittel im Sorptionsmittel (32) aufgenommen wird; und
D) Auffangen der Wärme, gebildet im Sorptionsmittel (32) in der Sorptionskammer (30) mittels eines Phasenwechsel-Kühlkörpermaterials (40).

## Revendications

1. Procédé de préparation d'une chambre d'évaporateur (10) destinée à un réfrigérateur portable à usage unique de type à évaporation non libérable, le procédé comprenant de :
(A) former un mélange de solvant non aqueux volatile et d'un dispersant de fluide frigorigène ;
(B) déposer ledit mélange sur la surface intérieure (12) d'une chambre d'évaporateur (10) ;
(C) faire évaporer ledit solvant volatile pour laisser un revêtement substantiellement uniforme de dispersant de fluide frigorigène sur ladite surface intérieure de ladite chambre d'évaporateur (10) ;
(D) charger ledit revêtement de dispersant de fluide frigorigène avec de l'eau frigorigène pour produire une couche substantiellement uniforme épaisse de pas plus d'environ 0,0762 cm (0,03 pouces) d'eau frigorigène intimement associée avec ledit revêtement de dispersant de fluide frigorigène ;
(E) éliminer le gaz de la chambre d'évaporateur en mettant sous vide ladite chambre d'évaporateur (10) ; et
(F) fermer hermétiquement la chambre d'évaporateur (10) pour empêcher une réintroduction de gaz vers ladite chambre d'évaporateur (10),
dans lequel la chambre d'évaporateur (10) est équipée d'un moyen (44) destiné à commander la communication de fluide entre l'intérieur de la chambre d'évaporateur (10) et un vase externe de pression inférieure, et dans lequel la chambre d'évaporateur (10) est adaptée pour procurer un transfert thermique entre ses surfaces (14) intérieure et extérieure.

2. Procédé selon la revendication 1, comprenant en outre une chambre de sorbeur (30) séparée de la chambre d'évaporateur (10) par un moyen (44) destiné à empêcher une communication de fluide entre la chambre de sorbeur et la chambre d'évaporateur jusqu'à une activation du dispositif.

3. Procédé selon la revendication 1, dans lequel le solvant volatile est choisi parmi le groupe consistant en des alcools à chaîne courte.

4. Procédé selon la revendication 1, dans lequel le dispersant de fluide frigorigène est un matériau polymérique choisi parmi le groupe consistant en des polymères et des copolymères à base acrylique, des polymères greffés d'amidon et des acrylates copolymériques.

5. Procédé selon la revendication 1, dans lequel le mélange comprend d'environ 10 à environ 70 % en poids de solvant volatile, et d'environ 30 à environ 90 % en poids de matériau polymérique.

6. Procédé selon la revendication 1, dans lequel le mélange est déposé substantiellement sur l'ensemble de la surface intérieure (12) de ladite chambre d'évaporateur (10).

7. Procédé selon la revendication 1, dans lequel substantiellement la totalité de la surface intérieure (12) de la chambre d'évaporateur (10) est recouverte d'un vernis protecteur, sur lequel le dispersant de fluide frigorigène est déposé.

8. Procédé selon la revendication 1, dans lequel ladite chambre d'évaporateur (10) est mise sous vide à une pression de pas plus d'environ 2,6664 Pa (20 mTorr).

9. Procédé selon la revendication 1, dans lequel l'étape consistant à :
(A) former le mélange comprend de former un mélange d'un méthanol et d'un copolymère d'acrylamide et d'un sel alcalin de l'acide acrylique ;
(B) déposer ledit mélange comprend un dépôt sur une surface intérieure (12) protégée par un vernis d'une chambre d'évaporateur (10), dans lequel ladite chambre d'évaporateur est constituée d'aluminium ;
(C) faire évaporer ledit solvant volatile comprend de faire évaporer ledit méthanol pour laisser un revêtement dudit copolymère sur ladite surface intérieure (12) de ladite chambre d'évaporateur (10) ;
(D) charger ledit revêtement de dispersant de fluide frigorigène comprend de charger ledit revêtement de copolymère avec de l'eau jusqu'à une épaisseur de couche d'eau/copolymère combinée de pas plus d'environ 0,0762 cm (0,03 pouces) ;
(E) mettre sous vide la chambre d'évaporateur (10) comprend une mise sous vide jusqu'à une pression de pas plus d'environ 2,6664 Pa (20 mTorr) ;
dans lequel le moyen destiné à commander la communication de fluide est en outre adapté pour commander la communication de fluide entre l'intérieur de la chambre d'évaporateur (10) et un sorbeur (30) qui est maintenu à une pression de pas plus d'environ 1,9998 Pa (15 mTorr).

10. Chambre d'évaporateur fermée hermétiquement et mise sous vide comprenant :
(A) une chambre étanche au gaz (10) mise sous vide jusqu'à une pression de pas plus d'environ 2,6664 Pa (20 mTorr) ;
(B) une couche substantiellement uniforme de dispersant de fluide frigorigène revêtant au moins une portion de la surface intérieure (12) de ladite chambre étanche au gaz (10) ;
(C) une couche substantiellement uniforme d'eau frigorigène, épaisse de pas plus de 0,0762 cm (environ 0,03 pouces), collée sur ladite couche de dispersant de fluide frigorigène ; et
(D) un moyen (44) destiné à commander la communication de fluide entre l'intérieur de ladite chambre (10) et un vase de pression inférieure (30).
dans lequel la chambre d'évaporateur est équipée d'un moyen destiné à commander la communication de fluide entre l'intérieur de la chambre d'évaporateur et un vase externe de pression inférieure, et dans lequel la chambre d'évaporateur est adaptée pour procurer un transfert thermique entre ses surfaces intérieure et extérieure.

11. Chambre d'évaporateur selon la revendication 10, dans lequel le fluide frigorigène est l'eau.

12. Chambre d'évaporateur selon la revendication 10, dans laquelle le dispersant de fluide frigorigène est un copolymère d'acrylamide et un sel de métal alcalin de l'acide acrylique.

13. Chambre d'évaporateur selon la revendication 10, dans laquelle le moyen (44) destiné à commander la communication de fluide comprend un joint cassable et un actionneur.

14. Chambre d'évaporateur produite selon le procédé de la revendication 1.

15. Procédé de refroidissement d'un produit à l'aide d'un réfrigérateur portable à usage unique de type à évaporation non libérable qui produit une vapeur de fluide frigorigène pendant un chauffage évaporatif, le procédé comprenant de :
A) prévoir un réfrigérateur portable à usage unique de type à évaporation non libérable comprenant :
1) une chambre d'évaporateur (10) se trouvant en contact thermique avec un produit (5) à refroidir, dans lequel la chambre d'évaporateur (10) comprend une eau frigorigène, dispersée dans une couche substantiellement uniforme épaisse de pas plus d'environ 0,0762 cm (0,03 pouces), et en contact intime avec une couche substantiellement uniforme de dispersant de fluide frigorigène polymérique choisi parmi le groupe consistant en des polymères et des copolymères à base acrylique, des polymères greffés d'amidon et des acrylates copolymériques, dans lequel la chambre d'évaporateur (10) est mise sous vide jusqu'à une pression de pas plus d'environ 2,6664 Pa (20 mTorr) ;
2) un sorbeur (30) sous vide comprenant un sorbant se trouvant en contact avec un matériau de dissipation thermique (40) de type à changement de phase ;
3) un moyen (44) destiné à empêcher l'écoulement de vapeur de fluide frigorigène entre la chambre d'évaporateur (10) et le sorbeur (30), jusqu'à la manoeuvre du dispositif ;
B) manoeuvrer le moyen (44) destiné à empêcher l'écoulement de vapeur de fluide frigorigène, permettant ainsi ledit écoulement, ce par quoi la pression se trouvant dans la chambre d'évaporateur (10) est réduite, conduisant l'eau frigorigène à se vaporiser et à former une vapeur frigorigène, la vapeur étant collectée par le matériau sorbant (32) se trouvant dans le sorbeur (30) et de la chaleur étant générée dans le sorbant (32) ;
C) éliminer la vapeur de la chambre d'évaporateur (10) en collectant la vapeur jusqu'à ce qu'un équilibre soit atteint, dans lequel le sorbant (32) est substantiellement saturé ou substantiellement tout le fluide frigorigène a été collecté dans le matériau sorbant (32) ; et
D) confiner la chaleur générée dans le sorbant (32) à l'intérieur du sorbeur (30) au moyen du matériau de dissipation thermique (40) de type à changement de phase.
